# EUROPÄISCHE PATENTANMELDUNG

(11) **EP 1 749 799 A1**
(43) Veröffentlichungstag der Anmeldung: **07.02.2007**
(21) Anmeldenummer: 05016885.5
(22) Anmeldetag: 03.08.2005
(51) Int. Cl.: C02F 1/72, B01F 3/04

(54) **Wasseraufbereitungsgerät**

(71) Anmelder: Stadler, Norbert, 5020 Salzburg (AT)
(72) Erfinder: Stadler, Norbert, 5020 Salzburg (AT)
(74) Vertreter: Rothkopf, Ferdinand

(57) **Zusammenfassung**

Mittels eines Wasseraufbereitungsgerät (10) wird Wasser belebt und "repariert", indem insbesondere folgende Schritte durchführt werden: Beschleunigen des Wassers zum Erhöhen der Strömungsgeschwindigkeit des Wassers, nachfolgendes Erzeugen einer chaotischen Strömung des Wassers und Einführen von gasförmigem Sauerstoff in das chaotisch verwirbelte Wasser.

## Beschreibung

### Hintergrund der Erfindung

Die Erfindung betrifft ein Wasseraufbereitungsgerät, welches insbesondere in Form eines Wasserbelebungsstabrohres ausgebildet und mit einem Strömungsweg zum Hindurchleiten von aufzubereitendem Wasser versehen ist. Das Wasseraufbereitungsgerät dient zum Wiederbeleben und Reinigen von Wasser jeglicher Art und führt zu einer neuartigen Aufbereitung, Belebung und "Reparatur" des Wassers in einem genau abgestimmten Verfahren, welches insbesondere beim Durchströmen eines Rohres Schritt für Schritt durchlaufen wird. Die Erfindung betrifft ferner ein Verfahren zum derartigen Aufbereiten von Wasser.

Zur Wasseraufbereitung werden derzeit Systeme und Verfahren verwendet, bei denen das Wasser entweder mechanisch mittels Filtern oder biologisch mittels Klärbehälter gereinigt wird. Ferner sind Verfahren bekannt, bei denen Sauerstoff dem Wasser durch Einpressen oder Versprühen zugeführt wird. Während bei einer mechanischen oder biologischen Reinigung Fremdstoffe aus dem Wasser entfernt werden können, gelingt es bei der Zufuhr von Sauerstoff grundsätzlich, den Sauerstoffanteil im Wasser zu erhöhen. Zu beachten ist aber, dass bei der derartigen Sauerstoffzufuhr der Sauerstoff nicht wirklich im Wasser "gelöst" wird und es nicht zu einer wirklichen "Reparatur" der Wasseratome kommt. So kommt es insbesondere nicht zu einer Neuanordnung von zwei Wasserstoffatomen zusammen mit einem Sauerstoffatom zu einem neuen Wasseratom (H₂O).

### Zugrundeliegende Aufgabe

Es ist eine Aufgabe der Erfindung ein Gerät und ein Verfahren zur Aufbereitung von Wasser zu schaffen, welches die durch die allgemeine Umweltverschmutzung und durch den Transport des Wassers in Leitungen zerstörte Struktur des Wassers wieder in Urzustand ähnliche Verfassung bringt und das Wasser neu belebt.

### Erfindungsgemäße Lösung

Diese Aufgabe ist erfindungsgemäß mittels eines Wasseraufbereitungsgeräts mit einem Strömungsweg zum Hindurchleiten von aufzubereitendem Wasser gelöst, bei dem eine im Strömungsweg angeordnete Beschleunigungsstrecke zum Erhöhen der Strömungsgeschwindigkeit des Wassers, ein nachfolgend im Strömungsweg angeordneter Wirbelbereich zum Erzeugen einer chaotischen Strömung des Wassers und ein dem Wirbelbereich zugeordneter Zugabebereich zum Einführen von gasförmigem Sauerstoff in das Wasser vorgesehen sind. Ferner ist die Aufgabe mit einem Verfahren zum Aufbereiten von Wasser mit den Schritten gelöst: Beschleunigen des Wassers zum Erhöhen der Strömungsgeschwindigkeit des Wassers, nachfolgendes Erzeugen einer chaotischen Strömung des Wassers und Einführen von gasförmigem Sauerstoff in das chaotisch verwirbelte Wasser.

Die Erfindung basiert auf der Erkenntnis, dass das heutzutage durch die allgemeine Umweltverschmutzung und durch den Transport in Leitungen veränderte Wasser eine veränderte Zuordnung von Wasserstoffatomen zu Sauerstoffatomen aufweist und insbesondere der Sauerstoffgehalt des Wassers auf diese Weise stark reduziert ist. Andererseits beruht die Erfindung auf der Erkenntnis, dass es nicht ausreicht, der derart zerstörten Wasserstruktur beispielsweise Sauerstoff in einem Pressverfahren zuzuführen, denn dieser Sauerstoff wird nicht wirklich in die Struktur des Wassers integriert, sondern wird stattdessen oftmals in sehr kurzer Zeit wieder freigesetzt. Der derart im Wasser gebundene Sauerstoff kann insbesondere nicht von Lebewesen in der erforderlichen Weise aufgenommen werden, sodass derartige Verfahren im Grunde genommen wertlos erscheinen.

Erfindungsgemäß wird hingegen ein völlig andersartiger Weg gewählt, indem die Wasserstruktur "repariert" wird. Dazu wird zunächst die Struktur der Wasseratome aufgelöst und die Wasserstoffatome (H⁺) werden etwas von den Sauerstoffatomen (O⁻) entfernt. Dieser Vorgang geschieht, indem das Wasser einer hohen Beschleunigung ausgesetzt und seine Strömungsgeschwindigkeit erhöht wird. In die derart "geöffnete" Wasserstruktur wird dann innerhalb einer chaotischen Strömung des Wassers gasförmiger Sauerstoff zugeführt. Die offene Wasserstruktur ermöglicht es dem Sauerstoff sich in die Struktur einzugliedern und führt zu einer Neuordnung, bei der weitgehend jeweils wieder ein Sauerstoffatom zwei Wasserstoffatomen zugeordnet wird. Es kommt auf diese Weise zu einer wirklichen Bindung des zugeführten Sauerstoffs im Wasser.

Als besonders vorteilhaft hat sich für das oben erläuterte "Öffnen" der Wasserstruktur eine Erhöhung der Strömungsgeschwindigkeit des Wassers auf etwa das 3- bis 5-fache bevorzugt das zirka 4-fache der ursprünglichen, in Leitungen üblichen Strömungsgeschwindigkeit erwiesen.

Der gasförmige Sauerstoff wird bevorzugt mit einem Überdruck von nur zirka 0.1 bar bis zirka 0,3 bar, insbesondere zirka 0,2 bar dem Wasser zugeführt.

Mit dem erfindungsgemäßen Verfahren ist es möglich und sinnvoll, dem Wasser pro Liter zirka 25 mg bis zirka 40 mg, bevorzugt zirka 30 mg bis zirka 35 mg Sauerstoff zuzuführen.

Für das Erzeugen der erhöhten Strömungsgeschwindigkeit wird das Wasser bevorzugt durch eine Verengung, wie beispielsweise eine Drossel oder eine Düse geführt. Der zuzuführende Sauerstoff kann in besonders einfacher Weise durch eine Rohrleitung mit kleinem Durchmesser, insbesondere zirka 0,1 mm, zugeführt werden. Zum Verwirbeln und Erzeugen der chaotischen Strömung des Wassers wird bevorzugt eine Kegelspitze oder eine Art Nadel verwendet, auf die das Wasser mit der erhöhten Strömungsgeschwindigkeit zugeleitet wird.

Das derart erfindungsgemäß mit Sauerstoff angereicherte und "reparierte" Wasser wird nachfolgend bevorzugt einer Beruhigungsstrecke zugeführt, in der es verlangsamt fortströmt und die Bindungen zwischen den Wasserstoffatomen und den Sauerstoffatomen wieder verfestigt werden. Die Wasseratome vereinen sich dabei wieder auf natürliche Art über "Brückenbildung".

Indem die Beruhigungsstrecke ferner mit Steinmaterial gefüllt ist, welches von dem Wasser umströmt wird, kann das Wasser Information und Spurenelemente aufnehmen, so wie es auch in natürlicher Umgebung stattfindet.

Um das Wasser darüber hinaus zu beleben und ihm eine ähnliche Struktur zu verleihen, wie sie bei hochwertigem Quellwasser vorzufinden ist, wird abschließend insbesondere mittels einer Kurvenbahn eine zykloide Strömung des Wassers erzeugt, bevor das Wasser aus dem Wasseraufbereitungsgerät austritt. Diese zykloide Strömung formt die Drehbewegung des Wassers nach, welche dieses in natürlicher Umgebung aufgrund des Erdmagnetismus erfährt.

Durch das derart der Natur nachgestellte Verfahren wird erreicht, dass das Wasser seiner ursprünglichen Struktur (insbesondere im Hinblick auf die Atomanordnung H₂O) wieder nahe kommt und seine Selbstreinigungskräfte aktiviert werden. Ferner wird das Wasser derart mit Sauerstoff und Energie angereichert, dass diese(r) von Menschen, Tieren und Pflanzen aufgenommen werden kann. Untersuchungen haben ergeben, dass das mit dem erfindungsgemäßen Gerät und Verfahren behandelte Wasser einen bis zu 10-fachen Gehalt an Sauerstoff im Vergleich zu unbehandeltem Wasser aufweist und dieser Sauerstoff insbesondere im Darmtrakt von Menschen besonders gut an das venöse Blut abgegeben werden kann. Im venösen Blut wird dadurch die Anzahl bzw. der Anteil roter Blutkörperchen erhöht, um diesen Sauerstoff innerhalb des Körpers zu transportieren. Die erhöhte Anzahl roter Blutkörperchen im Blut führt dann zugleich auch zu einer vermehrten Sauerstoffaufnahme in der Lunge des Menschen und erhöht dadurch den gewünschten Effekt nochmals.

Schließlich sei noch angemerkt, dass das erfindungsgemäße Gerät und Verfahren besonders vorteilhaft an Rohrleitungen und Wasserversorgungssystemen zur Anwendung kommen kann, wie sie heutzutage weltweit zum Bereitstellen von fließendem Wasser in besiedelten Gebieten verwendet werden. Die erfindungsgemäß erzeugte Struktur und Zusammensetzung des Wassers bleibt innerhalb derartiger Rohrsysteme bis zu zirka 100 m weitegehend erhalten, sodass an einem einzelnen erfindungsgemäßen Wasseraufbereitungsgerät auch mehrere Wasserauslassstellen angeschlossen sein können.

### Kurzbeschreibung der Zeichnungen

Nachfolgend wird ein Ausführungsbeispiel eines erfindungsgemäßen Wasseraufbereitungsgeräts anhand der beigefügten schematischen Zeichnungen näher erläutert. Es zeigt:

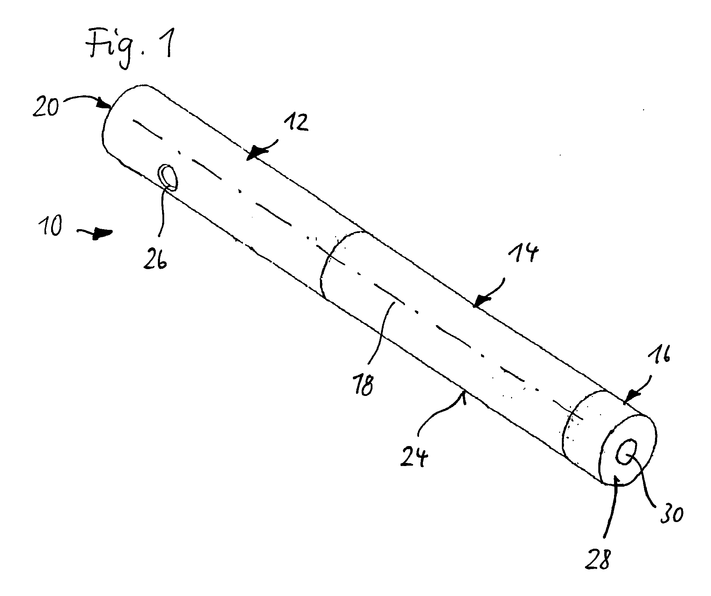

- Fig. 1: eine perspektivische Ansicht eines Ausführungsbeispiels eines erfindungsgemäßen Wasseraufbereitungsgeräts,

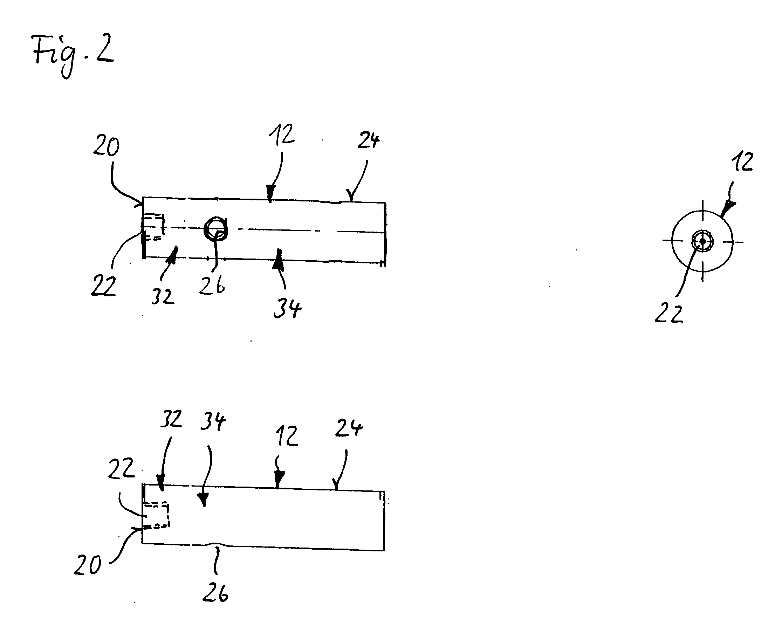

- Fig. 2: drei Ansichten eines ersten Bauteils des Wasseraufbereitungsgeräts gemäß Fig. 1,

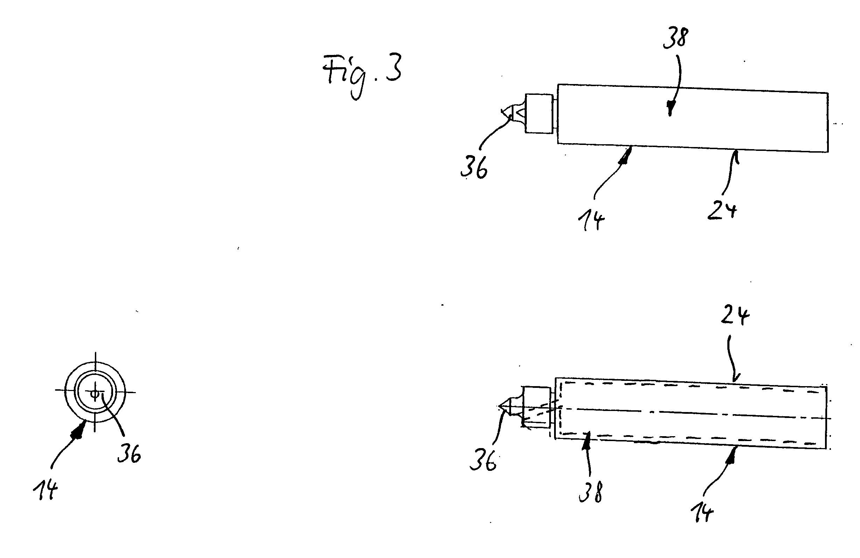

- Fig. 3: drei Ansichten eines zweiten Bauteils des Wasseraufbereitungsgeräts gemäß Fig. 1,

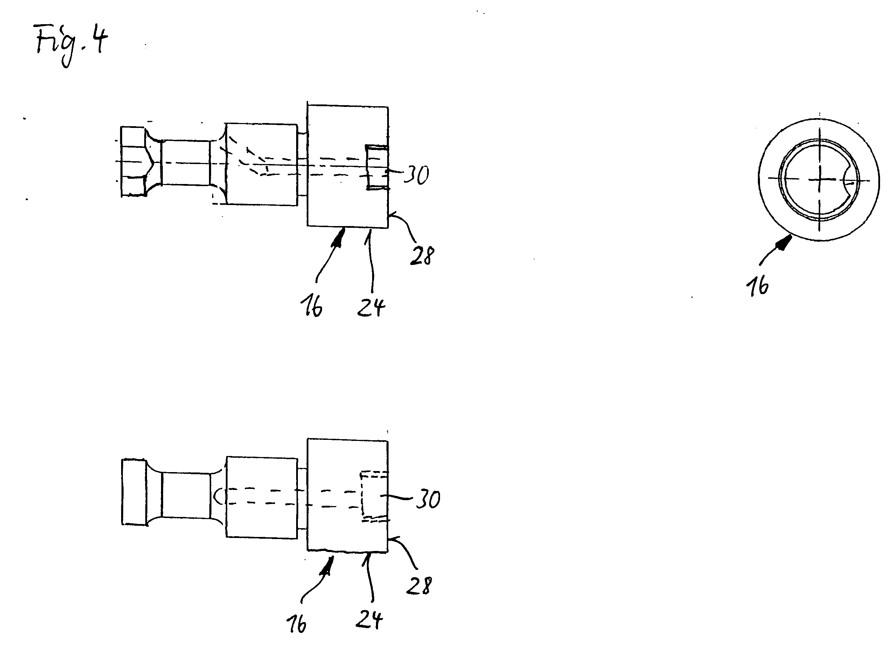

- Fig. 4: drei Ansichten eines dritten Bauteils des Wasseraufbereitungsgeräts gemäß Fig. 1 und
- Fig. 5: einen schematischen Längsschnitt des Wasseraufbereitungsgeräts gemäß Fig. 1.

### Detaillierte Beschreibung des Ausführungsbeispiels

In den Fig. ist ein Wasseraufbereitungsgerät 10 veranschaulicht, welches stabförmig gestaltet und dabei aus im Wesentlichen drei Bauteilen 12, 14 und 16 zusammengesetzt ist. Die Bauteile 12, 14 und 16 sind jeweils im Wesentlichen zylindrisch ausgebildet und erstrecken sich entlang einer Längsachse 18 des Wasseraufbereitungsgeräts 10.

Die Bauteile 12, 14 und 16 sind dabei derart fluiddicht miteinander verschraubt, dass mit ihnen ein im Wesentlichen geschlossenes Gehäuse ausgebildet ist, an dem sich an einer Stirnseite 20 ein Wassereinlass 22, an der Mantelfläche 24 ein Anschluss 26 und an der gegenüberliegenden Stirnseite 28 ein Wasserauslass 30 befinden.

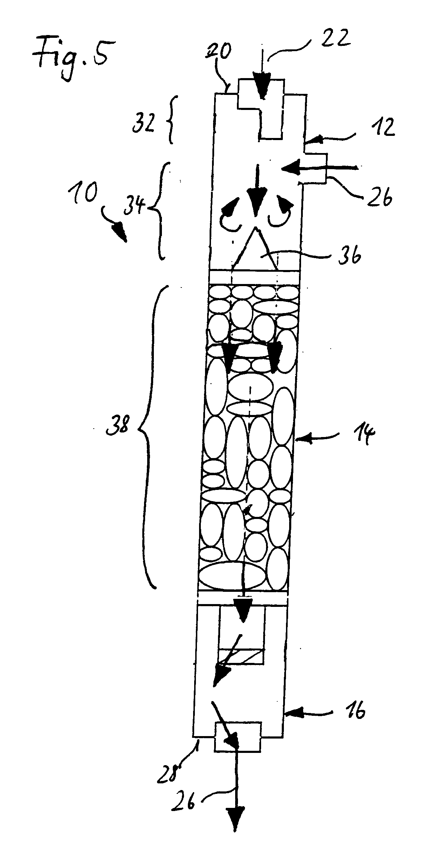

Zwischen dem Wassereinlass 22 und dem Wasserauslass 30 ist im Innern des Wasseraufbereitungsgeräts 10 ein besonders gestalteter Strömungsweg für das Wasser ausgebildet, der insbesondere in Fig. 5 prinzipiell veranschaulicht ist.

Der Strömungsweg weist zunächst eine Beschleunigungsstrecke 32 auf, welche sich in dem Bauteil 12 unmittelbar hinter dem Wassereinlass 22 in Form einer (nicht näher dargestellten) Drossel befindet. An die Beschleunigungsstrecke 32 schließt ein Wirbelbereich 34 an, in dem das durch die Beschleunigungsstrecke 32 geförderte und dabei auf hohe Strömungsgeschwindigkeit gebrachte Wasser in eine chaotische Strömung übergeführt wird. Diese chaotische Strömung wird insbesondere mittels eines spitzen Kegels 36 erzeugt, der an einem Ende des Bauteils 14 ausgebildet ist und auf dem das durch die Beschleunigungsstrecke 32 eintretende Wasser gelenkt wird. An dem Wirbelbereich 34 befindet sich ferner der Anschluss 26, durch den mit einem Druck von zirka 0,2 bar dem verwirbelten Wasser reiner Sauerstoff gasförmig zugeführt wird.

Der Sauerstoff wird mit dem Wasser vermischt, dessen Atome der Wassermoleküle zuvor durch die hohe Beschleunigung und durch ein sich dadurch ergebendes Ionisieren voneinander etwas getrennt worden sind. Durch die Zufuhr des Sauerstoffs in das derart vorbereitete Wasser wird dessen Manko an Sauerstoff ausgeglichen und es werden Sauerstoffatome in den aus Wasseratomen und Sauerstoffatomen bestehenden Verbund der Wassermoleküle aufgenommen. Zugleich wird die bisher bestehende Struktur des Wassers durch Aufspaltung der Wassercluster (ein so genanntes Levitieren) aufgelöst. Die Strukturinformation des Wassers wird damit sozusagen gelöscht.

Nach einem Durchleiten des Wassers durch den Kegel 36 hindurch verlässt dieses den Wirbelbereich 34 und strömt weiter in eine Beruhigungsstrecke 38, welche eine bezogen auf den Durchlass im Kegel 36 vergrößerte Strömungsquerschnittsfläche aufweist. Die Beruhigungsstrecke 38 ist als ein zylindrischer Raum gestaltet, welcher mit Steinen, insbesondere Edelsteinen, beispielsweise Rosenquarz, Bergkristall, Kiesel und/oder Marmor gefüllt ist. Die einzelnen Steine weisen einen durchschnittlichen Durchmesser von zwischen zirka 2 mm bis zirka 4 cm auf. Das Wasseraufbereitungsgerät 10 wird in verschiedenen Baugrößen hergestellt, wobei die einzelnen Baugrößen sich insbesondere im Hinblick auf die Länge der Beruhigungsstrecke 38 unterscheiden. Für die folgenden Durchströmungsmengen wurden dabei folgende Steingrößen und Längen der Beruhigungsstrecke 38 als besonders vorteilhaft erkannt. Bei 120 l/h Durchströmung beträgt der mittlere Durchmesser der Steine bevorzugt zwischen zirka 2 mm und zirka 4 mm und die Länge der Beruhigungsstrecke 38 bevorzugt zwischen zirka 12 cm und zirka 13 cm. Bei einer angestrebten Strömungsmenge von zirka 1000 l/h beträgt die durchschnittliche Steingröße bevorzugt zwischen zirka 2,5 cm und zirka 3 cm und die Länge der Beruhigungsstrecke 38 bevorzugt zirka 40 cm. Bei einer Durchflussmenge von zirka 2000 l/h beträgt der durchschnittliche Steindurchmesser bevorzugt zwischen zirka 2 cm und zirka 4 cm und die Länge der Beruhigungsstrecke 38 bevorzugt zirka 50 cm.

In der derart gestalteten Beruhigungsstrecke 38 nimmt das Wasser von den sich darin befindenden Steinen und Edelsteinen sozusagen Information auf und strukturiert sich im Hinblick auf die Wasserstoff- und Sauerstoffatome innerhalb der Wassermoleküle neu. Das Wasser wird dadurch sozusagen "repariert" und erhält eine ursprüngliche, naturnahe Struktur.

Am Ende der Beruhigungsstrecke 38 wird das Wasser schließlich im Abschnitt des dritten Bauteils 16 einer zykloiden Strömung unterworfen, bevor es nachfolgend aus dem Wasserauslass 30 ausströmt. Die zykloide Strömung wird insbesondere dadurch erzeugt, dass das Wasser in den Wasserauslass schräg eingeleitet wird, insbesondere in einem Winkel zur Längsachse 18 von zirka 50 ° bis zirka 75 °, besonders bevorzugt von zirka 65 °. Die damit erreichte zykloide Verwirbelung führt zu einer zusätzlichen Belebung des Wassers und stellt das sich in der freien Natur eigentlich ergebende Verhalten des Wassers nach, bei dem das Wasser durch das Erdmagnetfeld zu einem Strömungswirbel angeregt wird.

Insgesamt wird mit dem derartigen Wasseraufbereitungsgerät erreicht, dass das Wasser seiner ursprünglichen Struktur wieder nahe kommt und seine Selbstreinigungskräfte aktiviert werden. Ferner ist das derart behandelte Wasser in einer Weise mit Sauerstoff angereichert, dass dieser von Menschen, Tieren und Pflanzen besonders gut wiederaufgenommen werden kann. So weist erfindungsgemäß behandeltes Wasser beispielsweise vor der Aufbereitung bzw. Belebung und "Reparatur" lediglich einen Sauerstoffgehalt von zirka 3 mg/l bis zirka 7 mg/l auf, während es nach der Wasseraufbereitung zirka 35 mg/l bis zirka 40 mg/l enthält.

Abschließend sei angemerkt, dass sämtlichen Merkmalen, die in den Anmeldungsunterlagen und insbesondere in den abhängigen Ansprüchen genannt sind, trotz dem vorgenommenen formalen Rückbezug auf einen oder mehrere bestimmte Ansprüche, auch einzeln oder in beliebiger Kombination eigenständiger Schutz zukommen soll.

### Bezugszeichenliste

- 10: Wasseraufbereitungsgerä
- 12: Bauteil
- 14: Bauteil
- 16: Bauteil
- 18: Längsachse
- 20: Stirnseite
- 22: Wassereinlass
- 24: Mantelfläche
- 26: Anschluss
- 28: Stirnseite
- 30: Wasserauslass
- 32: Beschleunigungsstrecke
- 34: Wirbelbereich
- 36: Kegel
- 38: Beruhigungsstrecke

## Patentansprüche

1. Wasseraufbereitungsgerät (10) mit einem Strömungsweg zum Hindurchleiten von aufzubereitendem Wasser,
**gekennzeichnet durch** eine im Strömungsweg angeordnete Beschleunigungsstrecke (32) zum Erhöhen der Strömungsgeschwindigkeit des Wassers, einen nachfolgend im Strömungsweg angeordneten Wirbelbereich (34) zum Erzeugen einer chaotischen Strömung des Wassers und einen dem Wirbelbereich (34) zugeordneten Zugabebereich (26) zum Einführen von gasförmigem Sauerstoff in das Wasser. -

2. Wasseraufbereitungsgerät nach Anspruch 1,
**dadurch gekennzeichnet, dass** die Beschleunigungstrecke (32) mittels einer Drosselstelle im Strömungsweg gestaltet ist.

3. Wasseraufbereitungsgerät nach Anspruch 1 oder 2,
**dadurch gekennzeichnet, dass** dem Wirbelbereich (34) eine Beruhigungsstrecke (38) zum verlangsamten Fortströmen des Wassers nachgeordnet ist.

4. Wasseraufbereitungsgerät nach Anspruch 3,
**dadurch gekennzeichnet, dass** die Beruhigungstrecke (38) mit Steinmaterial gefüllt ist, welches von dem Wasser umströmt werden kann.

5. Wasseraufbereitungsgerät nach einem der Ansprüche 1 bis 4,
**dadurch gekennzeichnet, dass** eine Kurvenbahn zum Erzeugen einer zykloiden Strömung des Wassers vorgesehen ist, bevor das Wasser aus dem Wasseraufbereitungsgerät (10) austritt.

6. Verfahren zum Aufbereiten von Wasser mit den Schritten: Beschleunigen des Wassers zum Erhöhen der Strömungsgeschwindigkeit des Wassers, nachfolgendes Erzeugen einer chaotischen Strömung des Wassers und Einführen von gasförmigem Sauerstoff in das chaotisch verwirbelte Wasser.

7. Verfahren nach Anspruch 6,
**dadurch gekennzeichnet, dass** die Strömung des Wassers zunächst auf etwa das 3- bis 5-fache, bevorzugt das zirka 4-fache der ursprünglichen Strömungsgeschwindigkeit beschleunigt wird.

8. Verfahren nach Anspruch 6 oder 7,
**dadurch gekennzeichnet, dass** der gasförmige Sauerstoff mit einem Überdruck von nur zirka 0,1 bar bis zirka 0,3 bar, bevorzugt zirka 0,2 bar dem Wasser zugeführt wird.

9. Verfahren nach einem der Ansprüche 6 bis 8,
**dadurch gekennzeichnet, dass** das Wasser nach dem Erzeugen einer chaotischen Strömung durch eine Beruhigungsstrecke (38) hindurchgeführt wird.

10. Verfahren nach einem der Ansprüche 1 bis 9,
**dadurch gekennzeichnet, dass** mit dem Wasser nach der Beruhigungstrecke (38) eine zykloide Strömung erzeugt wird, bevor das Wasser nachfolgend aus dem Wasseraufbereitungsgerät (10) austritt.
